# FASCICULE DE BREVET EUROPEEN

(11) **EP 1 866 136 B1**
(45) Date de publication et mention de la délivrance du brevet: **11.03.2009**
(21) Numéro de dépôt: 06726124.8
(22) Date de dépôt: 22.03.2006
(51) Int. Cl.: B29B 17/02, B09B 3/00

(54) **PROCEDE DE RECUPERATION DES MATERIAUX POLYMERES ET DES MATERIAUX METALLIQUES CONSTITUTIFS DE PLANCHES DE BORD DE VEHICULES AUTOMOBOLIES EN FIN DE VIE DEMONTEES MANUELLEMENT**
VERFAHREN ZUR RÜCKGEWINNUNG VON POLYMEREN UND METALLISCHEN MATERIALIEN AUS ARMATURENBRETTINSTRUMENTEN VON MANUELL ZERLEGTEN SCHROTTFAHRZEUGEN
METHOD FOR RECOVERING POLYMER MATERIALS AND METALLIC MATERIALS CONSTITUTING PANEL INSTRUMENTS OF MANUALLY DISMANTLED END-OF-LIFE MOTOR VEHICLES

(30) Priorité: 22.03.2005 FR 0502813
(43) Date de publication de la demande: 19.12.2007
(73) Titulaire: Indra (S.A.), 38300 Bourgoin Jallieu (FR)
(72) Inventeur: MARIS, Elisabeth, F-73000 Chambery (FR); FROELICH, Daniel, F-73000 Chambery (FR); DEL VECCHIO, Jean-Marie, F-69300 Caluire (FR)
(74) Mandataire: Gaucherand, Michel
(86) Numéro de dépôt international: PCT/FR2006/000626
(87) Numéro de publication internationale: WO 2006/100381

(56) Documents cités:
- EP-A- 0 422 460
- WO-A-99/47318
- DE-A1- 19 510 923
- US-A- 4 650 126

## Description

### DOMAINE DE L'INVENTION

L'invention concerne un procédé de séparation sélective de matériaux organiques de synthèse en vue de leur recyclage mécanique, lesdits matériaux étant présents comme constituants principaux sous forme de composites multicouches, de pièces et sous-ensembles d'équipements automobiles, comprenant également des éléments métalliques.

L'invention concerne plus particulièrement un procédé de séparation sélective focalisé sur le seul gisement des planches de bord issues du démontage de véhicules arrivés en fin de vie, à contrario du gisement constitué par les résidus de broyage obtenus après broyage complet du véhicule.

Les nouvelles directives européennes de valorisation des véhicules, hors d'usage arrivés en fin de vie, exigent qu'ils soient traités en vue d'une valorisation qui doit, en particulier, prendre la forme d'un recyclage matière, par opposition à une seule valorisation thermique dans le cas des matériaux organiques de synthèse.

Ces matériaux organiques de synthèse, communément appelés matières plastiques, constituent une grande part des composants des pièces et sous-ensembles que l'on trouve aujourd'hui dans un véhicule automobile. Contrainte d'allègement, liberté de conception et facilité de mise en oeuvre sont autant de raisons justifiant ce choix d'utilisation des matières plastiques.

Cependant, ces pièces et sous-ensembles, une fois arrivés en fin de vie sont autant de déchets plastiques. Ces déchets sont constitués par une multiplicité de types de matériaux organiques de synthèse associés, polymères et/ou copolymères de nature chimique différente, chargés ou non, modifiés ou non, thermoplastiques et/ou thermodurcissables, se présentant sous diverses formes, rigides et/ou flexibles et/ou alvéolaires. Ils peuvent se présenter sous la forme de pièces assemblées par collage, vissage, rivetage, soudage, et/ou sous la forme de composites multicouches. Ces matériaux sont potentiellement valorisables, en particulier, par recyclage mécanique, par opposition au recyclage chimique, mais doivent, pour ce faire, subir différents traitements de séparation et de purification, avant de pouvoir être réutilisés.

Une approche possible de valorisation des véhicules hors d'usage, passe par la voie du broyage intégral du véhicule après que sa dépollution a été effectuée. Les fluides, les équipements pyrotechniques ainsi que la batterie et éventuellement, les pneumatiques sont retirés par démontage et autres opérations manuelles.

Une autre approche possible de valorisation des véhicules hors d'usage passe par la voie d'opérations de démontage plus conséquentes, sous réserve de performance économique.

D'autres opérations de démontage peuvent être alors effectuées en vue de récupérer divers composants alimentant le marché des pièces automobile d'occasion, marché dont la logique économique est certaine.

La carcasse du véhicule, une fois séparée des composants précités est alors expédiée au broyeur. Un traitement au niveau du broyage du véhicule complet permet de séparer les fractions métalliques lourdes des fractions mixtes plus légères. Le flux issu de cette opération de broyage et traité par voie de première séparation aéraulique est un mélange essentiellement de matériaux organiques, associés à divers autres matériaux (fractions minérales et métalliques légères), l'ensemble constituant ce qui est communément appelé « résidus de broyage automobile. Ces résidus de broyage automobile subissent alors différents traitements particulièrement élaborés, compte tenu de la complexité de leur composition.

Le démontage des planches de bord s'inscrit dans cette autre approche possible de valorisation des véhicules hors d'usage, en permettant à certains acteurs de la filière de traitement et de valorisation des véhicules hors d'usage - les dé-constructeurs - de développer leur activité tout en satisfaisant aux besoins de valorisation matière imposée par les directives et décrets récents.

En effet, la concentration en faisceaux de câbles dans cette zone du véhicule où se trouve la planche de bord, fait qu'une valeur certaine, la valeur du cuivre, peut être dégagée de cette opération de démontage de telles pièces et sous-ensembles. Une fois cette planche de bord démontée, les faisceaux deviennent accessibles. Dès lors, les planches de bord sont à considérer comme un flux spécifique à traiter, sous réserve de développement de technologies de séparation simples. Les matériaux ainsi séparés, aussi bien majoritairement « plastiques » que « métal », peuvent alors être expédiés vers des unités de traitements utilisant des technologies de recyclage existantes.

Ainsi peuvent être associées, non seulement la valorisation matière des câbles de cuivre, préalablement séparés, mais potentiellement la valorisation matière de la planche de bord.

### ETAT DE LA TECHNIQUE

Différents types de planches de bord ont été développés par les équipementiers et les constructeurs automobiles. Les ensembles les plus simples sont réalisés par injection à partir de matériaux thermoplastiques essentiellement du polypropylène. Cependant, pour différentes raisons de sécurité, de confort et de recherche d'esthétique, les équipementiers et constructeurs automobiles ont rapidement et pas seulement pour les modèles de voitures les plus luxueux, mis en place des planches de bord élaborées et complexes. Ces planches de bord sont alors constituées d'une armature rigide, réalisée à partir d'un matériau thermoplastique de type polypropylène, généralement chargé de fibre de verre ou de talc ou de type alliage de polycarbonate et d'acrylonitrile-butadiène-styrène injecté d'une sous-couche de mousse semi-rigide, en polyuréthane thermodurcissable, moulée sur l'armature rigide, offrant une certaine capacité d'absorption de chocs et d'une peau d'aspect, formée sur la mousse, peau, en général, fabriquée à partir de chlorure de polyvinyle, ou d'alliage de chlorure de polyvinyle et d'acrylonitrile-butadiène-styrène transformé en feuille thermoplastique à capacité de thermoformage, ou peau de chlorure de polyvinyle réalisée par les techniques dites de « slush molding ». L'ensemble forme une pièce composite multicouches et est rigidifié dans certains cas par une traverse en métal.

Les différents composants, thermoplastiques rigides constituant l'armature rigide, mousse intermédiaire semi-rigide, peau flexible, sont accrochés les uns aux autres par l'intermédiaire de la mousse de polyuréthane en vue d'offrir une structure composite solidaire. Des colles intermédiaires peuvent être également utilisées.

L'état de la technique propose deux voies de traitement pour de telles planches de bord, suivant qu'il s'agit, d'une part de pièces industrielles ayant des défauts de fabrication, par exemple, des plis sur la surface de la peau, créés lors du moussage in-situ, la feuille thermo-formable ayant été mal positionnée dans le moule ou de morceaux de planche de bord ayant été découpés par poinçonnage ou par découpe laser, pour permettre, par exemple, de positionner un couvercle de boite à gants, un appareil de radio, une grille de ventilation ou un « air bag » ou qu'il s'agit, d'autre part, de fragments de planches de bord issus du broyage complet du véhicule automobile.

Dans le cas de fragments de planches de bord issus du broyage automobile, se retrouvant par conséquent en mélange avec tous les types possibles de fragments mono et multi-matériaux présents dans les résidus de broyage automobile, différents procédés de concentration, séparation, triage et purification ont été développés. De tels traitements ont pour objet d'extraire d'un mélange de matériaux, un matériau en particulier, ou encore de séparer des matériaux métalliques des matériaux organiques de synthèse associés, ou d'extraire d'autres types de matériaux agissant comme polluants pour la fraction la plus valorisable. Des traitements ont également été développés en vue de réduire la teneur en polymères chlorées d'une fraction constituée par des polymères d'origine diverse.

L'état de la technique révèle plusieurs documents concernant le cas spécifique des planches de bord issues de déchets et chutes de production, ainsi que des déchets de poinçonnage de ces mêmes planches de bord.

Le document EP422460 (DAVIDSON TEXTRON) propose un traitement destiné au recyclage des chutes provenant des découpes de planches de bord. La séparation du composant semi-rigide qu'est la mousse de polyuréthane de son support rigide s'effectue, sur des fragments préalablement broyés, par dégradation de la mousse de polyuréthane par l'humidité. Une séparation densimétrique des autres composants permet de récupérer les fragments de peau et les fragments de la structure rigide thermoplastique.

Le document EP0469270 (DAVIDSON TEXTRON) décrit une méthode permettant de récupérer le chlorure de polyvinyle constituant la peau et la mousse de polyuréthane provenant de pièces composites plastiques préalablement broyées. Une étape d'élimination de l'électricité statique précède la séparation par lit fluidisé vibratoire des particules de polychlorure de vinyle, des particules de mousse.

Le document DE 4216638 (DAIMLER CHRYSLER) décrit un procédé destiné à séparer les différentes matières plastiques présentes dans des pièces composites à recycler telles qu'en particulier des planches de bord. Les matières constitutives de telles planches de bord sont une mousse polyuréthane semi-rigide, une peau et une structure porteuse rigide. Dans une première étape, les fragments de matériaux composites sont soumis à impact dans un broyeur à marteaux, qui désagrège la mousse de polyuréthane semi-rigide, permettant sa séparation du support rigide et de la peau auxquels la mousse est accrochée. Dans une seconde étape, une séparation aéraulique effectuée sur un lit fluidisé passant au travers d'un tamis vibrant permet de trier les fragments de peau flexible des fragments de structure thermoplastique rigide. L'étape de broyage préalable s'effectue de telle manière que les fragments restent de taille importante, c'est-à-dire de 10 à 20 mm, et ce afin de ne pas perdre l'avantage du renforcement par fibres suffisamment longues lors du réemploi du thermoplastique rigide.

Le document DE19510923 (WIPAG POLYMERTECHNIK), également focalisé sur les pièces intérieures d'automobile, en particulier, les planches de bord, décrit un procédé qui permet de séparer les fragments de matériaux composites mélangés, après broyage. Le traitement de séparation s'appuie sur le fait que les particules et fragments provenant du broyage de telles planches de bord ont des dimensions et comportements différents et peuvent, dès lors, être séparés en au moins deux fractions enrichies.

Dans cette méthode originale, la variation du comportement moyen de rebond des fragments est prise comme critère pour la séparation. Un jet de particules est dirigé contre une surface d'impact inclinée sous un angle autre que 90 degrés par rapport à la direction de ce jet. Les particules ayant des résiliences différentes rebondissent avec des trajectoires différentes, formant les flux séparés enrichis, qui peuvent être ultérieurement transférés aux procédés de séparation de types densimétriques. Le document revendique également un dispositif pour mettre en oeuvre le procédé.

Le document US4650126 décrit un procédée de broyage en particules fines d'un polymère mou et collant en utilisant un additif de broyage qui adhère à la surface du polymère et favorise sa fragmentation.

Le document WO99/47318 décrit un procédé pour décaper des fragments broyés de matériaux thermoplastiques recouverts de peinture ou d'adhésif par attrition en milieu humide par agitation et de préférence en utilisant des agents chimiques pour faciliter l'attrition.

Dans tous ces procédés, les flux de matériaux extraits sont les thermoplastiques rigides, polypropylène (PP) chargé de fibres de verre ou talc ou alliage de polycarbonate (PC) et d'acrylonitrile-butadiéne-styrène (ABS) d'une part et les feuilles flexibles constituant la peau, polychlorure de vinyle (PVC) ou alliage de chlorure de polyvinyle et d'acrylonitrile-butadiéne-styrène d'autre part. La mousse de polyuréthane thermodurcissable apparaît dès lors comme un résidu.

Toutefois tous ces procédés s'appliquent essentiellement sur des planches de bord homogènes en terme de composition, c'est-à-dire issues de la même fabrication, mais présentant des défauts ou chutes de poinçonnage également homogènes en terme de composition, et ne présentant pas de polluants métalliques divers tels que, éléments de visserie, inserts et autres éléments métalliques car ne provenant pas du démontage des planches de bord de véhicules variés arrivés en fin de vie, De plus, suivant les forces d'accrochage présentes entre la mousse polyuréthane thermodurcissable et la peau d'une part et la mousse polyuréthane thermodurcissable et la structure rigide d'autre part, les fragments de matériaux séparés pourront ne pas être totalement libérés de traces de mousse polyuréthane thermodurcissable restée accrochée.

Cette présence de résidus de mousse de polyuréthane thermodurcissable et éventuellement de colles et adhésifs sur les fragments de thermoplastiques rigides (provenant de l'âme de la planche de bord) et/ou flexibles (provenant de la peau de la planche de bord) peut être tolérée dans certaines applications non critiques ou pour certains procédés de recyclage opérant, par exemple, par dissolution puis filtration. Cependant, pour les applications les plus nobles, il importe de s'assurer que ces matériaux thermodurcissables agissant comme polluants ont été totalement éliminés.

### OBJET DE L'INVENTION

Ainsi l'état de la technique le plus proche traite de l'utilisation de techniques de désagrégation par impact et de techniques aérauliques et de tamisage pour séparer la fraction constituée par les mousses essentiellement polyuréthane thermodurcissable semi-rigides rendues pulvérulentes et de techniques aérauliques ou balistiques pour séparer la fraction constituée par les fragments de peau, de la fraction constituée par les fragments de structure rigide thermoplastiques.

De nombreux objectifs sont, dès lors, assignés à l'objet de l'invention, de telle sorte que l'essentiel au moins des inconvénients perceptibles dans l'état de la technique en soit éliminé.
Un premier objet de l'invention est de créer un procédé de traitement et son installation industrielle correspondante, qui se focalise sur la séparation sélective des matériaux thermoplastiques et des matériaux métalliques constituants des planches de bord de véhicules automobiles arrivés en fin de vie, planches de bord telles qu'obtenues par démontage manuel, tel que pratiqué, de manière industrielle, par les dé-constructeurs.

Un autre objet de l'invention est de créer un procédé permettant de réaliser une pré-concentration des matériaux organiques de synthèse valorisables de type, en particulier thermoplastiques, présents dans le flux des matériaux constituants des planches de bord de véhicules automobiles arrivés en fin de vie.

Un autre objet de l'invention est de créer un procédé permettant de préparer ces matériaux thermoplastiques rigides et semi-rigides, de manière à ce qu'ils puissent être ensuite traités par toute voie de séparation densimétrique fine ou par tout autre procédé de recyclage, c'est-à-dire à ce qu'ils soient exempts de toute pollution résiduelle de type matériaux thermodurcissables restés accrochés.

### SOMMAIRE DE L'INVENTION

L'invention concerne un procédé de séparation sélective de matériaux organiques de synthèse en vue de leur recyclage mécanique, lesdits matériaux étant présents comme constituants principaux, sous forme de composites multicouches, de pièces et sous-ensembles d'équipements automobile, de type planches de bord préalablement démontées, lesdits matériaux comprenant également des éléments métalliques valorisables et constituant le flux entrant et qui se caractérise en ce qu'il comporte les étapes de
a) Pré-broyage/déchiquetage,
b) Séparation magnétique des composants ferreux,
c) Séparation par induction et courant de Foucault ou table vibrante des composants non ferreux et/ou majoritairement non ferreux,
d) Broyage intensif accompagné d'une séparation aéraulique, d'un criblage de la fraction constituée par les matériaux organiques de synthèse du composite multicouches, libérée des composants métalliques, en vue d'éliminer les polluants non valorisables,
e) Délamination fine par attrition des fragments de matériaux organiques de synthèse rigides et flexibles, essentiellement thermoplastiques afin d'extraire la fraction thermodurcissable résiduelle restée présente à la surface des fragments broyées,
f) Séparation sélective des fragments issus de l'étape e) afin d'éliminer les particules de mousse thermodurcissable délaminées, éventuellement les particules de colle ou adhésif délaminées, afin de recueillir un flux exclusivement thermoplastiques pouvant être ensuite traité par des opérations de tris densimétriques ou autres, à des fins de recyclage par famille de compatibilité chimique.

### DESCRIPTION DETAILLEE DE L'INVENTION

Selon les objets de l'invention, le procédé et l'installation de traitement selon l'invention ont pour but :
✔ le traitement d'une pièce, composant ou sous-ensemble automobile arrivé en fin de vie telle qu'une planche de bord préalablement démontée, constituée de matériaux organiques de synthèse assemblés sous forme de composites multicouches, avec, en particulier, des inserts métalliques et/ou majoritairement métalliques.
✔ la délamination des couches en plusieurs étapes, afin d'obtenïr un mélange de fragments de matériaux organiques de synthèse essentiellement thermoplastiques, libres des fragments thermodurcissables et d'extraire les inserts métalliques, en vue de recycler mécaniquement ces différents matériaux.
✔ l'élimination des polluants thermodurcissables, mousses polyuréthane et colles, adhésifs, qui sont présents de par la nature de composites multicouches de telles pièces arrivées en fin de vie.
✔ la concentration des matériaux organiques de synthèse essentiellement de nature thermoplastique, compacts, contenus dans un flux de déchets mixtes ainsi que l'extraction des fragments métalliques et/ou majoritairement métalliques valorisables en vue de leur valorisation matière.

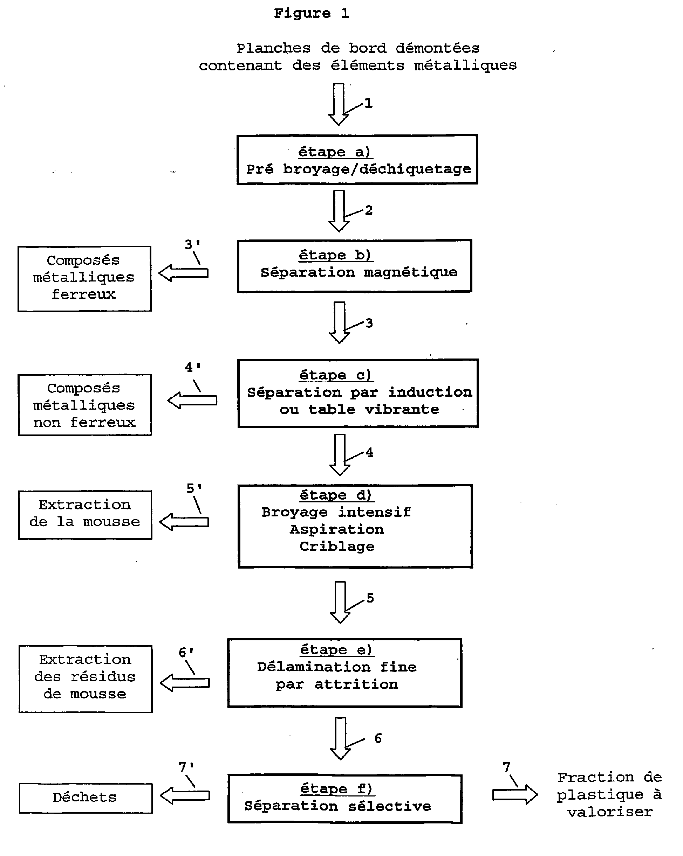

Pour bien comprendre le procédé selon l'invention et l'installation correspondante, il est fait référence à la figure 1 qui représente l'ensemble de l'installation de traitement destinée à traiter les planches de bord issues du démontage de véhicules arrivés en fin de vie.

Le flux 1 entrant dans l'installation de traitement est constitué par des planches de bord préalablement démontées contenant des éléments métalliques.

Le procédé comporte une étape (a) de pré-broyage/déchiquetage, suivi d'une étape (b) de séparation magnétique permettant d'extraire les fragments ferreux selon la flèche 3' et d'une étape (c) de séparation par induction et courants de Foucault ou table vibrante permettant d'extraire les fragments non ferreux et/ou majoritairement non ferreux selon la flèche 4'.
Le pré-broyage/déchiquetage opéré dans un broyeur/déchiqueteur a pour but de broyer/déchiqueter la planche de bord afin de réduire la taille des matériaux multicouches constitutifs de cet ensemble, mais surtout de libérer les inserts métalliques.

Une grille est intégrée au broyeur. Le refus de grille est réintroduit dans le pré-broyeur/déchiqueteur. La taille de la maille de la grille est de 20 mm à 75 mm et préférentiellement de 25 mm à 45 mm. Cette taille de grille permet de libérer les composants métalliques ou majoritairement métalliques des ensembles constitués par les matières plastiques associées.

Le flux sortant du broyeur/déchiqueteur est traité conformément à l'étape b) sur une bande transporteuse muni d'un séparateur magnétique permettant de séparer les fragments ferreux des autres matériaux fragmentés.

Le flux 3 sortant de l'étape b) est libéré des composants ferreux et est traité conformément à l'étape c). Ce flux 3 est traité sur bande transporteuse dans une installation à courants de Foucault qui créé un champ séparatif ou sur une table vibrante. Les fragments métalliques non-ferreux ou majoritairement non-ferreux, sont extraits selon la flèche 4' lors de cette étape.

Le flux 4 sortant de l'étape c) est donc un flux libéré des composants non ferreux ou majoritairement non-ferreux et est traité selon l'étape d).

Le procédé selon l'invention comporte une étape (d) de broyage intensif sous aspiration permettant une délamination grossière et ainsi une extraction de la mousse.

Ce broyage intensif a pour but de délaminer grossièrement les différentes couches du matériau composite multicouches et donc d'obtenir des matériaux essentiellement bi-couches. Ce broyage intensif se fait avec un broyeur à couteaux équipé de grilles dont la taille de maille est comprise entre 30 mm et 5 mm et préférentiellement entre 20 mm à 8 mm. Cette taille de maille de grille correspond à un optimum d'action séparative pour cette première délamination, tout en gardant capacité à ne pas casser la taille des fibres longues servant de renfort de rigidité pour les thermoplastiques constituant l'âme de la planche de bord lorsque ceux ci sont renforcés au moyen de fibres de verre. Des dimensions de mailles choisies au-delà de la valeur de maille préconisée n'engendre pas un effet de délamination suffisant pour les fragments broyés.

Le flux 4 entrant est traité par un broyeur intensif à couteaux et devient un flux, composé de différents fragments broyés, comprenant :
✔ Des fragments bi-couches PVC ou ABS-PVC/mousse constitués d'une couche de peau, soit faite de PVC soit faite d'un mélange ABS - PVC, et d'une couche de mousse polyuréthane résiduelle, celle-ci étant la plus fine possible et
✔ Des fragments bi-couches de thermoplastiques rigides associés à une couche de mousse polyuréthane et
✔ Des fragments mono-couches se présentant sous la forme de peau PVC ou ABS-PVC, de mousse polyuréthane à l'état particulaire qui n'aurait pas été extraits par aspiration et de fragments de thermoplastiques rigides.

A ce niveau, il n'existe plus de fragments composite tri-couches mais des fragments soit mono-couches, soit bi-couches comportant une couche de mousse résiduelle, celle-ci étant la plus fine possible.

Il y a bien eu délamination grossière, permettant le passage de trois couches à deux couches, par broyage intensif avec broyeur à couteaux.

Le broyage intensif s'effectue sous aspiration afin d'extraire les matériaux polluants légers, essentiellement les particules de mousses polyuréthane semi-rigide thermodurcissable ou éventuellement, les fragments de colles associées attachées aux particules de mousse, qui peuvent se libérer lors de ce broyage intensif, particules et poussières qui ont une densité apparente suffisamment faible pour pouvoir être aspirées. Les fragments de peau contenant, à leur surface des fragments résiduels de mousse polyuréthanne thermodurcissable peuvent éventuellement être, pour partie, éliminées à ce stade par aspiration mais une telle extraction ne pourra être totale et est fonction du niveau d'aspiration choisi.

A cette étape de délamination grossière par broyage intensif, succède un criblage, utilisant un cribleur vibrant à tamis de maille de 1 mm à 4 mm et préférentiellement de 1 mm à 2 mm, permettant d'éliminer tout fragment de faible dimension, essentiellement des particules de mousse polyuréthane et éventuellement des fragments dont la perte n'a pas de conséquence sur le plan de la rentabilité matière du procédé et qui sont considérés comme des déchets non valorisables.

A noter qu'il reste plus de mousse résiduelle sur la peau que sur les fragments de thermoplastiques rigides, de par les adhérences différentes entre les différents matériaux, à noter également qu'une planche de bord récente est plus difficile à délaminer grossièrement qu'une planche de bord ancienne de par le fait que la cohésion de la mousse polyuréthane se dégrade dans le temps.

Enfin, des différence de comportements apparaissent suivant les types de mise en oeuvre des planches de bord,
✔ peau en PVC réalisée par un procédé de trempage dit « slush molding », relativement plus épaisse et présentant une bonne adhérence sur leur substrat,
✔ peau en PVC ou ABS-PVC réalisée par un procédé de thermo-gainage et sur laquelle une mousse de polyuréthanne a été laminée avant d'être associée au substrat rigide,
✔ peau en PVC ou ABS-PVC réalisée par un procédé de thermoformage, cette peau étant plus facile à délaminer qu'une peau réalisée par la technique dite du « slush molding ».

Cependant, cette étape de broyage intensif dans un broyeur à couteaux ne permet qu'une délamination grossière et ne permet pas d'obtenir des matériaux organiques de synthèse valorisables parce que pas encore totalement libérés de leurs polluants thermodurcissables restés accrochés.

Il peut se trouver que à l'issue du broyage intensif à l'étape d) soient présents dans le flux 5 qui pourraient en être extraits d'ultimes résidus métalliques très petits libérés par la maille du broyage intensif et qu'il faut éliminer avant de rentrer dans l'étape e) de délamination fine. Dans ce cas, le flux 5 avant d'entrer dans l'étape e) passe par une étape d'élimination ultime des métaux par séparation magnétique puis par séparation par induction ou table vibrante constituant ainsi pour l'étape d) deux sous-étapes supplémentaires et successives d1 (séparation magnétique) et d2 (séparation par induction ou table vibrante). A la sortie de la sous-étape d2, le flux débarrassé des métaux entre dans l'étape e) de délamination fine.

Le flux 5 sortant de l'étape d) est donc traité selon une étape e) de délamination fine qui est nécessaire pour l'obtention de matériaux organiques de synthèse valorisables.

L'étape (e) de délamination fine a pour but de délaminer plus finement le flux 5 constitué par les fragments de matériaux organiques de synthèse se présentant sous la forme de composites bi-couches, c'est-à-dire essentiellement, les fragments thermoplastiques rigides et les fragments de peau semi-rigide ou flexible, encore recouverts partiellement de résidus de mousse, et éventuellement de colles et adhésifs. Il s'agit d'obtenir des matériaux organiques de synthèse essentiellement thermoplastiques, cependant en mélange, mais ayant un taux de pureté vis-à-vis du polluant thermodurcissable, totalement libérés de leur polluants. Une valorisation par recyclage mécanique devient possible, une fois que ces mélanges de thermoplastiques auront été séparés ultérieurement plus finement par des techniques densimétriques ou autres connues.

L'étape (e) de délamination fine par attrition peut s'effectuer dans un attriteur par voie sèche ou par voie humide.

L'attriteur peut être de type connu tel que constitué par une cuve fixe ou mobile équipée d'un agitateur mobile ou fixe, une enveloppe de type tube avec une vis sans fin d'entraînement. Dans le cas particulier d'une cuve fixe, celle-ci est préférentiellement dotée de moyens de stabilisation de type contre pale et de moyens d'entraînement qui peuvent être de type pale.

Dans le cas d'une délamination fine par voie humide, c'est-à-dire en milieu liquide, le traitement s'effectue en présence d'un abrasif et éventuellement d'un tensioactif choisi dans le groupe constitué par les composés anioniques, cationiques, amphotères ou non-ioniques de type connu.

Le milieu de traitement comportant les particules à attriter est préférentiellement soumis à une vitesse de rotation comprise entre 100 tours/minute et 400 tours/minute pendant un temps de traitement qui varie entre 20 minutes et 30 minutes.

Dans le cas d'une délamination fine par voie sèche et en l'absence d'abrasif, les particules à attriter sont soumises à une vitesse de rotation comprise entre 400 tours/minute et 3000 tours/minute, et de préférence entre 600 tours/minute et 1000 tours/minute pendant un temps de traitement qui varie entre 3 minutes et 20 minutes, de préférence entre 3 minutes et 15 minutes. Dans ce cas, la délamination fine par attrition s'effectue par simple frottement des fragments les uns sur les autres, c'est-à-dire en l'absence de tout moyen abrasif. Cette opération s'effectue soit en continu soit en discontinu. En continu, les temps de traitement peuvent être plus courts qu'en discontinu et peuvent se situer plus proches de la borne inférieure de l'intervalle préférentiel que de la borne supérieure.

La délamination fine par voie humide ou par voie sèche, s'effectue à une température au plus égale à 50 °C afin d'éviter le risque de ramollir les fragments thermoplastiques, en particulier les fragments souples de PVC.

Selon un mode de réalisation préféré de l'invention, l'étape (e) de délamination fine, par voie humide, par attrition s'effectue dans un attriteur, en un milieu aqueux et préférentiellement en présence d'un moyen abrasif, tel que, par exemple,
- une paroi abrasive,
- une pluralité de volumes à géométrie déterminée tels que des cubes, des sphères, des pyramides, des cônes, des cylindres ou des polyèdres réalisés en, ou recouvert d'éléments abrasifs,
- une composition abrasive, de type poudre, pâte ou suspension en milieu liquide et préférentiellement aqueux.

Cette étape e) permet de séparer et d'extraire les matériaux restant accrochés après l'étape d) de délamination grossière obtenue par broyage intensif sous aspiration, criblage et séparation hydraulique, comme les fragments de mousse polyuréthane semi-rigide thermodurcissable ou éventuellement les colles et adhésifs de liaison inter-couches.

Ces matériaux sont autant de polluants, s'ils restent encore à la surface des matériaux organiques de synthèse thermoplastiques délaminés grossièrement dans l'étape d) de broyage intensif.

Lorsqu'elle opère au moyen d'une composition abrasive, l'étape (e) de délamination fine par attrition, utilise des éléments choisis dans le groupe formé par les carbonates de calcium, les kaolins, les talcs, les silices, les grenats, les alumines, les corindons, les zircones, pris seuls ou en mélange.
La granulométrie de l'élément abrasif est comprise entre 200 microns et 800 microns.

La composition abrasive peut constituer un milieu bi-phasique solide/liquide comprenant des éléments abrasifs et un liquide, préférentiellement de l'eau, éventuellement en présence d'un agent tensioactif agissant comme agent mouillant.

Dans le cas particulier d'une pâte, la viscosité de la composition abrasive est d'au moins 10000 centipoises et préférentiellement comprise entre 100000 et 400000 centipoises mesurée dans des conditions normales de température et de pression.

La mise en mouvement, préférentiellement de type laminaire, des fragments à délaminer se fait dans l'attriteur. Les fragments bi-couches se trouvent dans un milieu aqueux contenant la pâte abrasive ; dès lors, ils sont mobiles les uns par rapport aux autres lorsque mis en mouvement avec les pales de l'attriteur ; la pâte abrasive est stabilisée dans le fond de la cuve.

Le frottement, au moins deux à deux, des fragments bi-couches se présentant essentiellement sous la forme de plaquettes, issus des étapes précédentes du procédé, enduites sur chacune de leur faces de la composition abrasive, est obtenu par l'intermédiaire d'une rotation du moyen d'entraînement de l'attriteur. Un tel mouvement engendre un frottement abrasif des fragments-plaquettes les uns sur les autres.
Les fragments à délaminer qui sont sous la forme de multicouches et plus précisément bi-couches, le sont quand le comportement au frottement de chaque matériau constitutif est distinct.

Ces mouvements relatifs dans le milieu abrasif permettent à la fois la fragmentation des pellicules de mousse adhérentes et la création d'un effort de cisaillement exercé entre les deux couches, les pellicules de mousse et la peau ou le substrat rigide, engendrant la rupture du lien cohésif et la libération de particules de mousse.
La configuration des pales en rotation est conçue de manière à traiter l'ensemble des fragments à délaminer se présentant sous forme de plaquettes uniformément.

Ainsi, l'étape e) permet la libération et l'extraction, selon la flèche 6', des résidus de mousse polyuréthane semi-rigide thermodurcissable, et éventuellement des colles et adhésifs de liaison inter-couches. Le flux 6 sortant de l'étape e) de délamination fine constitue donc un flux libéré des polluants décrits ci-dessus et est traité conformément à l'étape f) selon l'invention.

Le procédé selon l'invention comporte une étape f) de séparation sélective qui a pour but d'éliminer le polluant majoritaire, c'est-à-dire la mousse, en séparant thermoplastiques solides rigides, peaux flexibles et résidus pulvérulent comprenant particules de mousse, de colle et d'adhésif.

La séparation sélective est réalisée par criblage et/ou par traitement aéraulique, par exemple, par aspiration. L'un des flux sortant est formé de particules et de poussières de mousse et de thermoplastiques qui ne sont pas valorisables sous cette forme.

Dans le cas d'une délamination par voie humide, une étape f) de séparation sélective constituée par un criblage et un lavage simultané permet de libérer les fragments thermoplastiques des résidus d'abrasif et des résidus de mousse polyuréthanne, puis de les séparer. L'abrasif resté présent sur les fragments est ainsi éliminé par lavage dans une unité de lavage sous aspersion ou projection sous pression d'eau ou sous agitation dans un bac rempli d'eau, associé à un dispositif d'égouttage. L'eau de lavage peut éventuellement contenir un agent fongicide pour éviter les développements bactériens responsables de mauvaises odeurs si le produit est ensuite stocké en l'état. Les fragments thermoplastiques sont retenus par la grille de criblage alors que l'eau de lavage chargée des résidus particulaires de mousse et d'abrasifs passe au travers des mailles de la grille de criblage. Les abrasifs peuvent ensuite être recyclés. Dans le cas d'une délamination par voie humide, le milieu liquide est éventuellement recyclé et traité pour être en conformité avec les contraintes environnementales existantes, en particulier lorsque le milieu liquide est de l'eau qui peut être restitué au milieu naturel.

Un recyclage des grains d'abrasif est possible après séparation hydraulique entre résidus de mousse, colle et adhésifs, qui flottent et grains minéraux, qui coulent et qui peuvent être réintroduits dans le milieu abrasif.

Dans le cas de l'utilisation d'objets abrasifs, ils sont séparés des fragments de matériaux organiques de synthèse par toute technique connue telle que criblage ou séparation densimétrique.

Dans le cas d'une délamination par voie sèche, l'étape f) de séparation sélective est réalisée par un traitement aéraulique, par exemple, par une aspiration permettant l'élimination d'une première fraction de mousse et par un criblage permettant la récupération des thermoplastiques rigides et souples à valoriser et l'élimination de la fraction particulaire de mousse et de poussières de thermoplastiques non aspirées.
Dans ce cas de délamination par voie sèche, le dispositif de délamination est préférentiellement soumis à un refroidissement, par exemple, par un échangeur à circulation d'eau.

Le flux sortant 7 de l'étape f) est constitué de différents fragments de matériaux organiques de synthèse, en mélange, PVC souple et thermoplastiques rigides extraits du matériau composite multicouche, et sont ensuite éventuellement centrifugés et séchés, dans le cas d'une délamination réalisées par voie humide, pour être expédiés sur d'autres sites spécialisés où ils seront séparés plus finement en différentes fractions chimiquement homogènes, par des techniques de tri densimétrique ou par toute autre technique séparative connue.

Le procédé selon l'invention permet de traiter des sous-ensembles automobiles tels que des planches de bord préalablement démontées, composées de matériaux organiques de synthèse assemblés en composites multicouches et de pièces métalliques, ledit composite multicouche étant lui-même constitué d'une structure rigide réalisée à partir de thermoplastiques, d'une mousse semi-rigide en polyuréthane thermodurcissable et d'une peau en polychlorure de vinyle ou en alliage mettant en oeuvre du polychlorure de vinyle.

Le flux entrant dans l'installation de traitement est constitué par des planches de bord préalablement démontées. Les planches de bord sont extraites par démontage manuel et peuvent être triées par gamme de véhicule. Cet éventuel tri manuel est rendu possible grâce à des bases de données constituées par le réseaux de dé-constructeurs. Ces bases de données permettent d'identifier les planches de bord par type de composants et matières présentes, par exemple, celles constituées d'une peau PVC de celles qui ne le sont pas. Suivant les constructeurs et les modèles, il existe également des différences pour ce qui est des âmes thermoplastiques constituant la partie rigide de la planche de bord.

Le procédé selon l'invention est toutefois adapté et valable pour tous les types de planches de bord.

Toute pièce ou composants de biens de consommation durable, associant un élément composite multicouche composé d'un matériau organique de synthèse rigide, d'une couche de peau souple ou semi-rigide et d'un matériau alvéolaire semi-rigide friable de type mousse polyuréthane collée, pièces ou composants non encore libérés des éléments métalliques associés, peut être traité par le procédé.

Le procédé selon l'invention peut être utilisé pour la séparation sélective de matériaux organiques de synthèse issus de pièces et sous-ensembles d'équipements automobile se présentant sous forme de composites multicouches, de type planches de bord, préalablement démontés en vue de leur valorisation matière après séparation par famille de composition chimique.

### EXEMPLES

Dans les exemples présentés, le flux entrant dans l'installation de traitement était constitué par des planches de bord démontées de Citroën BX, de Renault R19 et de Renault Mégane.

Les compositions des planches de bord des trois véhicules testés sont rapportées dans les tableaux suivants, rappelant que les fractions métalliques proviennent de visserie, d'insert d'airbag, et d'éléments de renfort et que les fractions de thermoplastiques rigides étaient constituées de ABS, de mélange ABS / PC, de PP chargé de talc, de PP chargés de fibres de verre et que l'épaisseur des peaux variaient de 0,70 mm à 2,4 mm pour les peaux moussées:

**Tableau 1 composition des planches de bord de types Renault R19, Citroën BX, Renault Mégane constituant le flux de matériaux entrant du procédé selon l'invention.**

| **Flux de matériaux entrant** | **% en poids** |
|---|---|
| Métaux | 10 % à 40 % de la masse totale la |
| Thermoplastiques sous forme composite tri-couches représentant entre 60 % et 90% de la masse des thermoplastiques composant une planche de bord | Thermoplastiques rigides : 50 % à 60 % |
| | Thermoplastiques souples (peau PVC): 5 % à 30 % |
| | Mousses polyuréthanne : 15 % à 40 % |

### Exemple 1 : exemple réalisé avec les planches de bord des Renault R19.

Une fois démontées manuellement, les planches de bord ont été pré-broyées/déchiquetées par des broyeurs à couteaux pour en extraire les métaux. Cette étape a) de pré-broyage/déchiquetage des planches de bord avait pour objet de diminuer le volume du flux à gérer afin en particulier, de réduire les coûts logistiques mais surtout de permettre la libération des composants métalliques qui ont été noyés ou rattachés à la planche de bord tels que visseries, inserts comme les inserts profilés d'airbag.

Cette étape de pré-broyage/déchiquetage a été réalisée sur une ligne de pré-broyage/déchiquetage fabriquée et commercialisée par la société MTB RECYCLING, et constituée par un pré-broyeur/ déchiqueteur à couteaux renforcé, de type BDR 2400 pouvant accepter des planches de bord, la dimension de la grille était de 35 mm, la puissance de 200 KW et ce pour une production évaluée à 2 tonnes/heure.

L'intérêt de ce type de pré-broyeur/déchiqueteur était de permettre un broyage assez fin, par rapport à ce que peut faire un seul déchiqueteur et ce afin de libérer et extraire, en vue de leur tri, les inserts métalliques de petites tailles, vis et profilés d'airbag présents dans les planches de bord. Le pré-broyage/déchiquetage a été réalisé jusqu'à la maille de libération des métaux ; l'étape de tri des métaux libérés de manière optimale provenant de petits inserts métalliques tels que présents dans les planches de bord était alors facilitée.

Deux étapes b) et c) d'extraction et tri des métaux se sont succédées, tri magnétique des ferreux puis tri par table vibrante des non-ferreux en deux fractions, aluminium et autres non-ferreux, laissant un flux résiduel constitué essentiellement par des matières thermoplastiques composites multicouches comprenant une peau de PVC ABS-PVC, une couche intermédiaire constituée par de la mousse de polyuréthanne semi-rigide et des thermoplastiques rigides toujours associés en une structure composite tri-couches.

L'étape suivante a été une étape de délamination grossière par broyage intensif d) associée à une séparation aéraulique, par exemple, de type aspiration. Les planches de bord pré-broyées/déchiquetées dont les inserts et composants métalliques avaient été extraits dans les étapes précédentes du procédé selon l'invention, ont été plus finement broyées de manière intensive avec un broyeur à couteaux fabriqué et commercialisé par la société CMB. Ce broyeur était équipé d'une grille de 1000 mm x 400 mm possédant des trous de 10 mm et opérant à une vitesse de rotation des couteaux de 1500 tours/minute, pour une puissance de 30 KW. La fraction constituée essentiellement par les fragments de mousse polyuréthanne et autres fragments très légers a été aspirée dans un séparateur aéraulique et constituait un déchet.

A cette étape de délamination grossière par broyage intensif sous aspiration, a succédé un criblage utilisant un cribleur vibrant à tamis de 2 mm de maille permettant de séparer tout fragment de faible dimension, essentiellement des particules de mousse polyuréthanne et autres fragments non valorisables.

L'étape de délamination fine par attrition e) venait après les étapes précédentes de délamination grossière par broyage.

La fraction contenant des fragments de thermoplastique rigide d'épaisseur d'environ 3 mm à 5 mm, recouverts au moins partiellement de mousse ainsi que les fragments de peaux en PVC ou PVC/ABS d'environ 1,5 à 1,8 mm d'épaisseur recouverts également au moins partiellement de mousse ont ainsi été traités par délamination fine.

Cette étape de délamination fine a été réalisée dans un attriteur, sans abrasif et par voie sèche. L'attriteur comprenait une cuve et un système de pales rotatives. La vitesse de rotation des pales variait entre 400 et 2000 tours/minute. L'augmentation en température du procédé a été contrôlée par un système de refroidissement à eau composé par une double cuve. La température a été maintenue à une température inférieure à 50 °C. Le temps de traitement variait entre 15 minutes et 20 minutes.

La délamination fine par voie sèche a ensuite été suivie:
- D'une part, par une aspiration permettant l'élimination d'une première fraction de mousse et
- D'autre part, par un criblage permettant la récupération de thermoplastiques rigides et souples à valoriser et l'élimination de la fraction particulaire de mousse et de poussières de thermoplastiques non aspirée.

Le bilan massique du traitement des planches de bord selon le procédé de l'invention est consigné dans le tableau récapitulatif 2.

### Exemple 2 : exemple réalisé avec les planches de bord des Citroën BX.

Les étapes du procédé de traitement des planches de bord des BX selon l'invention ont été réalisées dans les mêmes conditions que celles décrites dans l'exemple 1 à l'exception de la délamination fine par attrition qui a été réalisée par voie humide et exposée ci-dessous.

Cette étape de délamination fine a été réalisée dans un attriteur, en présence d'un abrasif et d'un tensioactif non ionique, l'éther de polyéthylène glycol de concentration égale à 100 mg/l et par voie humide, c'est-à-dire en milieu aqueux. L'attriteur comprenait une cuve et un système de pales rotatives. Les pales étaient recouvertes en leurs extrémités de caoutchouc résistant à l'abrasion. La vitesse de rotation des pales variait entre 200 et 400 tours/minute mais pouvait éventuellement être plus élevée. L'augmentation en température du procédé a été contrôlée par un système de refroidissement à eau composé par une double cuve. La température a été maintenue à une température inférieure à 50 °C. Le temps de traitement variait entre 20 minutes et 30 minutes.

Le procédé de délamination fine, s'est fait au moyen d'une pâte abrasive mettant en oeuvre un abrasif de type grenat qui est une variété de silice. L'élément abrasif de type grenat australien est le type Barton HP commercialisé par la société A.G.P. S.A., de granulométrie comprise entre 200 et 600 microns.

La proportion de matière minérale permettant de réaliser le milieu bi-phasique abrasif se présentant sous forme de pâte, était de 2 kg par litre d'eau. Le volume de fragments à traiter par rapport au volume aqueux était dans un rapport d'environ 2 à 1.

A cette étape de délamination fine par voie humide s'est succédée une étape f) de criblage et de lavage simultané permettant de libérer les fragments thermoplastiques des résidus d'abrasif et des résidus de mousse polyuréthanne, puis de les séparer. Le lavage s'est effectué sous jet d'eau. L'abrasif et les poussières de mousse ont été extraits par criblage et les abrasifs recyclés.

Les fragments de thermoplastiques composés d'un mélange de thermoplastiques rigides de 3 mm à 5 mm d'épaisseur et de peau PVC de 1,8 mm à 2 mm ont pu être triés par un tri densimétrique classique ou autre.

L'avantage du procédé selon l'invention est d'obtenir un mélange de thermoplastiques facilement séparables parce que libéré des résidus de mousse.

L'autre avantage du procédé selon l'invention est d'améliorer la qualité et donc le type de débouché des différents matériaux une fois triés.

### Exemple 3 : exemple réalisé avec les planches de bord des Renault Mégane.

Les étapes du procédé de traitement des planches de bord des Renault Mégane selon l'invention ont été réalisées dans les mêmes conditions que celles décrites dans l'exemple 2, y compris l'étape e) de délamination fine qui a été réalisée par voie humide. L'appareillage ainsi que les conditions opératoires ont été les mêmes que celles utilisés dans l'exemple 2.

Les bilans massiques du traitement des planches de bord basés sur les trois essais exposés ci-dessus, selon le procédé de l'invention, sont rapportés dans le tableau récapitulatif 2.

**Tableau 2**

| **Type de plan- che de bord** | **% en poids de métaux récupérés** | **% en poids de plastiques rigides et souples récupérés valorisable** | **% en poids de mousse récupérée non valorisable** | **% en poids de déchets récupérés non valorisables** | **Type de délamination fine** |
|---|---|---|---|---|---|
| **Renault R19** | 22 | 44 | 30 | 4 | Voie sèche |
| **Citroën BX** | 25 | 61 | 11 | 3 | Voie humide |
| **Renault Mégane** | 15 | 67 | 14 | 3 | Voie humide |

Le procédé selon l'invention permet donc, par l'intermédiaire d'une étape de délamination fine très efficace de libérer le flux sortant de l'installation selon l'invention de son polluant majeur constitué par la mousse de polyuréthane thermodurcissable et permet ainsi le traitement du flux purifié par toute voie de séparation densimétrique fine ou par tout autre procédé de recyclage.

Le pourcentage de pureté des fragments de thermoplastiques rigides et souples recueillis après un tri densimétrique réalisé à la suite du procédé selon l'invention pour les trois types de planches de bord exposées ci-dessus était de l'ordre de 99,8 %. A l'évidence, il ne restait pratiquement pas de mousse de polyuréthane accrochée à la peau PVC ou aux fragments de thermoplastiques rigides. Il n'y avait pas de modification de densité apparente des fragments thermoplastiques par présence de mousse résiduelle qui viendrait perturber un tel tri densimétrique de vérification.

### Exemple 4: exemple réalisé avec 26 planches de bord issues du démontage de véhicules hors d'usage.

L'échantillon traité dans cet exemple était composé de 26 planches de bord issues du démontage de véhicules hors d'usage, planches représentatives du parc automobile de véhicules hors d'usage. La masse totale de cet échantillon était de 267 kg et la masse moyenne d'une planche de bord était de 10,3 kg.
Les câbles électriques de ces planches ont été partiellement extraits lors du démontage pour être valorisés par la filière câble.

Puis, les planches de bord ont été broyées une première fois, avec un broyeur/déchiqueteur commercialisé par la société MTB RECYCLING. La dimension de la grille était de 75 mm permettant une première séparation des fractions métalliques.
La fraction restante a ensuite été broyée afin d'obtenir une granulométrie moyenne de 14 mm, libérant ainsi les inserts métalliques des plastiques. Cette fraction restante a ensuite été soumise à séparation par tri magnétique pour les fractions ferreuses et par courant de Foucault pour les fractions non ferreuses.

Le bilan de matière qui a été établi est exposé dans le tableau suivant :

**Tableau 3 :**

| **Bilan matière** | **en Kg** |
|---|---|
| Métaux ferreux | 51,5 |
| Métaux non ferreux | 1,63 |
| Plastiques | 214,5 |
| Total | 267,63 |

| **Bilan matière** | **en % en poids** |
|---|---|
| Métaux | 19,85 |
| Plastiques | 80, 15 |

La délamination fine est effectuée par voie sèche. La vitesse des pales est de 800 tours/min pour un temps de séjour de 5 minutes.
Après la délamination fine, la mousse séparée a été extraite par criblage avec un tamis ayant une taille de maille de 1,8mm, et la fraction de thermoplastiques rigides a été dépoussiérée.
Les proportions de mousse et de thermoplastiques rigides récupérés, étaient respectivement d'environ 21% et 79%.

Une analyse par spectrométrie MIR indiquait que les thermoplastiques rigides étaient constitués par de l'ABS, du polypropylène chargé ou modifié (par styrène et méthacrylate), du polyphénylènéther modifié.

Les peaux de planches de bord séparées de la mousse représentaient environ 12% de la fraction totale des mousses thermoplastiques.

Des analyses par dissolution sélectives indiquaient un taux de pureté de la mousse de polyuréthane de 99,9%, et des traces de silicate provenant des charges minérales des polymères. Il n'a pas été décelé de mousse de polyuréthane dans la fraction de thermoplastiques rigides. La fraction mélangée constituée par les thermoplastiques rigides ainsi libérée de la mousse a pu ensuite être triée par séparation fine de type par exemple densimétrique pour être recyclé mécaniquement.

## Revendications

1. Procédé de séparation sélective de matériaux organiques de synthèse en vue de leur recyclage mécanique, lesdits matériaux étant présents comme constituants principaux sous forme de composites multicouches, de pièces et sous-ensembles d'équipements automobiles, de type planche de bord préalablement démontées, lesdits matériaux comprenant également des éléments métalliques valorisables et constituant le flux entrant, ledit procédé étant **caractérisé en ce qu'**il comporte les étapes suivantes :
a) Un pré-broyage/déchiquetage,
b) Une séparation magnétique des composants ferreux,
c) Une séparation par induction et courant de Foucault ou table vibrante, des composants non ferreux et/ou majoritairement non ferreux,
d) Un broyage intensif accompagné d'une séparation aéraulique, d'un criblage de la fraction constituée par les matériaux organiques de synthèse du composite multicouches libérée des composants métalliques, en vue d'éliminer les polluants non valorisables,
e) Une délamination fine par attrition des fragments de matériaux organiques de synthèse rigides et flexibles, essentiellement thermoplastiques afin d'extraire la fraction thermodurcissable résiduelle restée présente à la surface des fragments broyés,
f) Une séparation sélective des fragments issus de l'étape e) afin d'éliminer les particules de mousse thermodurcissable délaminées, éventuellement les particules de colle ou adhésif délaminées, afin de recueillir un flux exclusivement thermoplastique pouvant être ensuite traité par des opérations de tris, densimétriques ou autres, à des fins de recyclage par famille de compatibilité chimique.

2. Procédé selon la revendication 1, **caractérisé en ce que** l'étape de pré-broyage a) est opérée dans un broyeur/déchiqueteur.

3. Procédé selon la revendication 2, **caractérisé en ce que** le broyeur/déchiqueteur est muni d'une grille dont la maille est de 20 mm à 75 mm, et préférentiellement de 25 mm à 45mm.

4. Procédé selon l'une au moins des revendications 1 à 3, **caractérisé en ce que** la séparation magnétique des composants ferreux présent dans le flux sortant de l'étape a) est réalisée sur une bande transporteuse munie d'un séparateur magnétique.

5. Procédé selon l'une au moins des revendications 1 à 4, **caractérisé en ce que** la séparation des composants non ferreux présent dans le flux sortant de l'étape b) est réalisée sur une bande transporteuse, dans une installation à courants de Foucault ou sur une table vibrante.

6. Procédé selon l'une au moins des revendications 1 à 5, **caractérisé en ce que** le broyage intensif de l'étape d) se fait avec un broyeur à couteau équipé de grille dont la taille de la maille est comprise entre 30 mm et 5 mm et préférentiellement entre 20 mm et 8 mm.

7. Procédé selon l'une au moins des revendications 1 à 6, **caractérisé en ce que** le criblage qui suit le broyage intensif se fait avec un cribleur vibrant à tamis de maille de 1 mm à 4 mm et préférentiellement de 1 mm à 2 mm.

8. Procédé selon l'une au moins des revendications 1 à 7, **caractérisé en ce que** la délamination fine par attrition s'effectue par voie humide dans un attriteur en présence d'un abrasif.

9. Procédé selon la revendication 8, **caractérisé en ce que** la délamination fine par attrition s'effectue en présence d'un tensioactif choisi dans le groupe constitué par des composés anioniques, cationiques, amphotères ou non-ioniques.

10. Procédé selon l'une au moins des revendications 1 à 7, **caractérisé en ce que** la délamination fine par attrition s'effectue dans un attriteur, par voie sèche et en l'absence d'abrasif.

11. Procédé selon l'une au moins des revendications 1 à 9, **caractérisé en ce que** l'attrition s'effectue par un moyen abrasif de type paroi abrasive, ou une pluralité de volumes à géométrie déterminée en particulier des cubes, des sphères, des pyramides, des cônes, des cylindres ou des polyèdres réalisés en/ou recouverts d'éléments abrasifs, ou une composition abrasive de type poudre, pâte ou suspension en milieu liquide et préférentiellement aqueux.

12. Procédé selon la revendication 11, **caractérisé en ce que** les éléments abrasifs de la composition abrasive sont choisis dans le groupe formé par les carbonates de calcium, les kaolins, les talcs, les silices, les grenats, les alumines, les corindons, les zircones, pris seuls ou en mélange.

13. Procédé selon l'une au moins des revendications 11 et 12, **caractérisé en ce que** les éléments abrasifs de la composition abrasive ont une granulométrie comprise entre 200 microns et 800 microns.

14. Procédé selon l'une au moins des revendications 11 à 13, **caractérisé en ce que** la composition abrasive constitue un milieu bi-phasique solide/liquide comprenant des éléments abrasifs et un liquide en présence d'un agent tensioactif.

15. Procédé selon l'une au moins des revendications 8 à 14, **caractérisé en ce que** la délamination fine s'effectue à une température au plus égale à 50 °C.

16. Procédé selon l'une au moins des revendications 1 à 15, **caractérisé en ce que** l'étape de séparation sélective est réalisé par traitement aéraulique et/ou par criblage.

17. Procédé selon l'une au moins des revendications 1 à 9 et 11 à 16, **caractérisé en ce que** l'étape de séparation sélective est constituée par un criblage et un lavage simultané, ledit lavage étant réalisé sous aspersion ou projection sous pression d'eau ou sous agitation dans un bac rempli d'eau, associé à un dispositif d'égouttage.

18. Procédé selon l'une au moins des revendications 1 à 7 et 10 et 16, **caractérisé en ce que** l'étape de séparation sélective est réalisée par un criblage et par un traitement aéraulique.

19. Utilisation du procédé selon les revendications 1 à 18, pour la séparation sélective de matériaux organiques de synthèse issus de pièces et sous-ensembles d'équipements automobile se présentant sous forme de composites multicouches, de type planches de bord, préalablement démontés en vue de leur valorisation matière après séparation par famille de composition chimique.

## Claims

1. A method for selectively separating synthetic organic materials for mechanical recycling thereof, said materials being present as main components in the form of multilayer composites, parts and subassemblies of motor vehicle, such as dashboard, previously dismantled, said materials also including recoverable metal elements and making up the input flow, said method being **characterized in that** it includes the following steps:
a) pre-grinding/shredding,
b) magnetically separating the ferrous components,
c) separating by induction and eddy current or vibrating table, the non ferrous and/or mainly non ferrous components,
d) intensively grinding together with aeraulics separating, screening the fraction made of the synthetic organic materials of the multilayer composite released from the metal components, in order to remove the non-recoverable pollutants,
e) finely delaminating through attrition the rigid and flexible fragments of synthetic organic materials, substantially thermoplastic in order to take out the remaining residual thermosetting fraction present at the surface of the ground fragments,
f) selectively separating the fragments from step e) in order to remove the delaminated thermosetting foam particles, possibly the delaminated glue or adhesive particles, in order to collect an exclusively thermoplastic flow that is then processable by sorting, densitometric or the like operations, for recycling purposes by chemical compatibility family.

2. The method according to claim 1, **characterized in that** the pre-grinding step a) is carried out in a grinder/shredder.

3. The method according to claim 2, **characterized in that** the grinder/shredder is provided with a grid whose mesh is from 20 mm to 75 mm, and preferably from 25 mm to 45 mm.

4. The method according to at least one of claims 1 to 3, **characterized in that** magnetically separating the ferrous components present in the output flow from step a) is carried out on a conveyor belt provided with a magnetic separator.

5. The method according to at least one of claims 1 to 4, **characterized in that** separating the non-ferrous components present in the output flow from step b) is carried out on a conveyor belt, in an eddy current facility or on a vibrating table.

6. The method according to at least one of claims 1 to 5, **characterized in that** intensively grinding from step d) is carried out with a knife grinder equipped with a grid whose mesh size is between 30 mm and 5 mm and preferably between 20 mm and 8 mm.

7. The method according to at least one of claims 1 to 6, **characterized in that** screening following intensive grinding is carried out with a vibrating screen having a sieve of 1 mm to 4 mm mesh and preferably from 1 mm to 2 mm.

8. The method according to at least one of claims 1 to 7, **characterized in that** finely delaminating through attrition is carried out in a wet manner in an attritor in the presence of an abrasive.

9. The method according to claim 8, **characterized in that** finely delaminating through attrition is carried out in the presence of a surfactant selected from the group consisting in anionic, cationic, amphoteric or non-ionic components.

10. The method according to at least one of claims 1 to 7, **characterized in that** finely delaminating through attrition is carried out in an attritor, in a dry manner and in the absence of an abrasive.

11. The method according to at least one of claims 1 to 9, **characterized in that** the attrition is carried out by an abrasive means of the abrasive wall type, or a plurality of volumes with determined geometry, in particular cubes, spheres, pyramids, cones, cylinders or polyhedrons made of/or covered with abrasive elements, or an abrasive composition such as a powder, a paste or a liquid preferably aqueous medium suspension.

12. The method according to claim 11, **characterized in that** the abrasive elements of the abrasive composition are selected in the group consisting in calcium carbonates, kaolins, talcs, silicas, garnets, aluminas, corundums, zirconias, alone or in combination.

13. The method according to at least one of claims 11 and 12, **characterized in that** the abrasive elements of the abrasive composition have a particle size between 200 microns and 800 microns.

14. The method according to at least one of claims 11 to 13, **characterized in that** the abrasive composition makes up a solid/liquid biphasic medium including abrasive elements and a liquid in the presence of a surfactant.

15. The method according to at least one of claims 8 to 14, **characterized in that** finely delaminating is carried out at a temperature at most equal to 50°C.

16. The method according to at least one of claims 1 to 15, **characterized in that** the step of selectively separating is carried out by aeraulics processing and/or screening.

17. The method according to at least one of claims 1 to 9, and 11 to 16, **characterized in that** the step of selectively separating consists in simultaneously screening and washing, said washing being carried out by sprinkling or spraying under water pressure or by stirring in a vessel filled with water, associated with a dripping device.

18. The method according to at least one of claims 1 to 7, and 10 and 16, **characterized in that** the step of selectively separating is carried out by screening and aeraulics processing.

19. A use of the method according to claims 1 to 18, for selectively separating synthetic organic materials coming from parts and motor vehicle equipment subassemblies in the form of multilayer composites, such as dashboard, previously dismantled in order to recover material thereof after separating by chemical composition family.

## Patentansprüche

1. Verfahren zur selektiven Abtrennung von organischen Synthesewerkstoffen im Hinblick auf ihr mechanisches Recycling, wobei die Werkstoffe als Hauptbestandteile in Form von Mehrschicht-Verbundwerkstoffen, Teilen und Teilsystemen von Kraftfahrzeugausrüstungen vorliegen, in der Art eines vorher demontierten Armaturenbretts, wobei die Werkstoffe zudem verwertbare metallische Elemente enthalten und den eintretenden Materialfluss darstellen, wobei das Verfahren **dadurch gekennzeichnet ist, dass** es folgende Schritte umfasst:
a) ein Vorzerkleinern/Schreddern,
b) ein magnetisches Abtrennen der Eisenbestandteile,
c) ein Abtrennen der Nichteisen- bzw. mehrheitlichen Nichteisenbestandteile durch Induktion und Wirbelstrom oder Rütteltisch,
d) ein intensives Zerkleinern, begleitet von einer lufttechnischen Abtrennung, einer Siebung der von den metallischen Bestandteilen befreiten Fraktion aus den organischen Synthesewerkstoffen des Mehrschicht-Verbundwerkstoffs, um die nicht verwertbaren Schadstoffe zu eliminieren,
e) ein feines Delaminieren der starren und flexiblen, im Wesentlichen thermoplastischen Fragmente aus organischen Synthesewerkstoffen durch Zerreiben, um die an der Oberfläche der zerkleinerten Fragmente vorhanden gebliebene wärmeaushärtende Restfraktion zu extrahieren,
f) ein selektives Abtrennen der aus dem Schritt e) kommenden Fragmente zur Eliminierung der delaminierten Partikel aus wärmeaushärtendem Schaum, eventuell der delaminierten Leim-oder Klebstoffpartikel, um einen ausschließlich thermoplastischen Materialfluss aufzufangen, der anschließend durch Sortierungsvorgänge densimetrischer oder anderer Art für ein Recycling nach Klassen chemischer Kompatibilität behandelt werden kann.

2. Verfahren nach Anspruch 1, **dadurch gekennzeichnet, dass** der Vorzerkleinerungsschritt a) in einem Brecher/Schredder erfolgt.

3. Verfahren nach Anspruch 2, **dadurch gekennzeichnet, dass** der Brecher/Schredder mit einem Rost versehen ist, dessen Maschenweite 20 mm bis 75 mm und vorzugsweise 25 mm bis 45 mm beträgt.

4. Verfahren nach mindestens einem der Ansprüche 1 bis 3, **dadurch gekennzeichnet, dass** die magnetische Abtrennung der Eisenbestandteile, die in dem aus dem Schritt a) kommenden Materialfluss vorhanden sind, auf einem mit einem Magnetscheider versehenen Förderband durchgeführt wird.

5. Verfahren nach mindestens einem der Ansprüche 1 bis 4, **dadurch gekennzeichnet, dass** die Abtrennung der Nichteisenbestandteile, die in dem aus dem Schritt b) kommenden Materialfluss vorhanden sind, auf einem Förderband, in einer Wirbelstromanlage oder auf einem Rütteltisch durchgeführt wird.

6. Verfahren nach mindestens einem der Ansprüche 1 bis 5, **dadurch gekennzeichnet, dass** die intensive Zerkleinerung des Schritts d) mit einem Schneidbrecher erfolgt, welcher mit einem Rost versehen ist, dessen Maschenweite zwischen 30 mm und 5 mm und vorzugsweise zwischen 20 mm und 8 mm liegt.

7. Verfahren nach mindestens einem der Ansprüche 1 bis 6, **dadurch gekennzeichnet, dass** die auf die intensive Zerkleinerung folgende Siebung mit einer Rüttelsiebmaschine erfolgt, die ein Sieb mit einer Maschenweite von 1 mm bis 4 mm und vorzugsweise 1 mm bis 2 mm hat.

8. Verfahren nach mindestens einem der Ansprüche 1 bis 7, **dadurch gekennzeichnet, dass** die feine Delaminierung durch Zerreiben auf nassem Wege in einer Zerreibvorrichtung in Gegenwart eines Schleifmittels erfolgt.

9. Verfahren nach Anspruch 8, **dadurch gekennzeichnet, dass** die feine Delaminierung durch Zerreiben in Gegenwart eines Tensids erfolgt, gewählt aus der Gruppe bestehend aus anionischen, kationischen, amphoteren oder nichtionischen Verbindungen.

10. Verfahren nach mindestens einem der Ansprüche 1 bis 7, **dadurch gekennzeichnet, dass** die feine Delaminierung durch Zerreiben in einer Zerreibvorrichtung auf trockenem Wege und ohne Schleifmittel erfolgt.

11. Verfahren nach mindestens einem der Ansprüche 1 bis 9, **dadurch gekennzeichnet, dass** die Zerreibung mit einem Schleifmittel vom Typ Schleifwand erfolgt, oder mit einer Vielzahl von Körpern mit bestimmter Geometrie, insbesondere Würfeln, Kugeln, Pyramiden, Kegeln, Zylindern oder Polyedern, die aus Schleifelementen gefertigt oder damit bedeckt sind, oder mit einer Schleifzusammensetzung vom Typ Pulver, Paste oder Suspension in flüssigem und vorzugsweise wässrigem Medium.

12. Verfahren nach Anspruch 11, **dadurch gekennzeichnet, dass** die Schleifelemente der Schleifzusammensetzung aus der Gruppe gewählt werden, bestehend aus Kalziumcarbonat, Kaolin, Talk, Siliziumdioxid, Granat, Aluminiumoxid, Korund, Zirkon, einzeln genommen oder in Mischung.

13. Verfahren nach mindestens einem der Ansprüche 11 und 12, **dadurch gekennzeichnet, dass** die Schleifelemente der Schleifzusammensetzung eine Korngröße zwischen 200 Mikron und 800 Mikron haben.

14. Verfahren nach mindestens einem der Ansprüche 11 bis 13, **dadurch gekennzeichnet, dass** die Schleifzusammensetzung ein zweiphasiges Fest-/Flüssigmedium bildet, das Schleifelemente und eine Flüssigkeit in Gegenwart eines Tensids enthält.

15. Verfahren nach mindestens einem der Ansprüche 8 bis 14, **dadurch gekennzeichnet, dass** die feine Delaminierung bei einer Temperatur von höchstens 50 °C erfolgt.

16. Verfahren nach mindestens einem der Ansprüche 1 bis 15, **dadurch gekennzeichnet, dass** der selektive Abtrennschritt durch lufttechnische Behandlung und/oder durch Siebung erfolgt.

17. Verfahren nach mindestens einem der Ansprüche 1 bis 9 und 11 bis 16, **dadurch gekennzeichnet, dass** der selektive Abtrennschritt aus gleichzeitigem Sieben und Waschen besteht, wobei das Waschen unter Besprühen oder Bespritzen mit unter Druck stehendem Wasser oder unter Bewegung in einem mit Wasser gefüllten Behälter in Verbindung mit einer Abtropfvorrichtung durchgeführt wird.

18. Verfahren nach mindestens einem der Ansprüche 1 bis 7 und 10 bis 16, **dadurch gekennzeichnet, dass** der selektive Abtrennschritt durch Sieben und lufttechnische Behandlung durchgeführt wird.

19. Verwendung des Verfahrens nach den Ansprüchen 1 bis 18 für die selektive Abtrennung von organischen Synthesewerkstoffen, die aus Teilen oder Teilsystemen von Kraftfahrzeugausrüstungen stammen und in Form von Mehrschicht-Verbundwerkstoffen in der Art von vorher demontierten Armaturenbrettern vorliegen, im Hinblick auf ihre stoffliche Verwertung nach erfolgter Abtrennung nach Klassen chemischer Zusammensetzung.
